# FASCICULE DE BREVET EUROPEEN

(11) **EP 3 991 159 B1**
(45) Date de publication et mention de la délivrance du brevet: **15.07.2026**
(21) Numéro de dépôt: 20740243.9
(22) Date de dépôt: 26.06.2020
(51) Int. Cl.: G08B 21/04, G08B 29/18

(54) **DISPOSITIF ET PROCEDE DE DETECTION DE PRESENCE, NOTAMMENT D'UNE CHUTE DE PERSONNE**
VORRICHTUNG UND VERFAHREN ZUR ERKENNUNG VON ANWESENHEIT; INSBESONDERE EINES STURZES EINER PERSON
DEVICE AND METHOD FOR DETECTING THE PRESENCE, IN PARTICULAR A FALL OF A PERSON

(30) Priorité: 27.06.2019 FR 1907054
(43) Date de publication de la demande: 04.05.2022
(73) Titulaire: LINET France, 37170 Chambray-Lès-Tours (FR)
(72) Inventeur: BRILLAUD, Arnaud, 86240 Smarves (FR)
(74) Mandataire: Aquinov
(86) Numéro de dépôt international: PCT/EP2020/068065
(87) Numéro de publication internationale: WO 2020/260609

(56) Documents cités:
- GB-A- 2 498 951
- US-A1- 2016 328 941
- US-B1- 10 225 492

## Description

L'invention concerne un dispositif et un procédé de détection de présence et notamment de chute d'une personne, qui permettent de détecter à distance et de manière fiable, la chute d'une personne.

On entend dans la suite de la description par « chute de personne », la détection d'une chute d'une personne, ou la détection de plusieurs chutes de différentes personnes par le dispositif de détection de chute de l'invention.

L'invention sera plus particulièrement décrite, sans toutefois y être limitée, au regard de personnes âgées ou en perte d'autonomie, personnes hospitalisées, personnes à risque de chutes, etc.

Les personnes en perte d'autonomie ont tendance à se lever la nuit, pour aller aux toilettes par exemple, et à déambuler dans le noir. Dans ces circonstances, les risques de chutes sont importants.

Il est déjà connu des systèmes de détection avec des capteurs de mouvement qui sont placés à proximité d'un lit afin de détecter une sortie du lit ou une chute du lit, ou dans des pièces d'une habitation pour détecter une chute dans la pièce. Ces capteurs de mouvement sont de préférence par paire et décalés en hauteur selon un capteur haut et un capteur bas. Le capteur haut détecte toute personne debout puis vérifie après un temps donné si la présence est toujours détectée ; lorsque la présence n'est plus détectée, le capteur bas valide éventuellement la présence de la personne au niveau du sol et en déduit une chute.

Cependant, si ces dispositifs sont performants, le risque de détection de faux-positifs n'est pas nul. Des faux-positifs sont par exemple une personne assise dans son fauteuil qui bouge le haut du corps puis ne bouge que les pieds, ou une personne qui quitte une pièce en passant devant le dispositif (d'autant plus lorsqu'elle est en fauteuil roulant), ou une personne qui sort d'une pièce alors qu'elle est courbée par exemple pour faire du ménage (passe l'aspirateur, la serpillère), ou encore une personne à surveiller qui est suivie de près par un être vivant de taille plus petite que la personne, tel qu'un enfant ou un animal.

GB 2 498 951 A divulgue un dispositif de détection de chute de personne comportant un capteur situé au plafond de chaque pièce surveillée combiné à un capteur thermique matriciel mural.

US 2016/0328941 A1 divulgue un dispositif de détection de chute de personne fixé à un mur pouvant servir à d'autres fins telles que la détection d'intrusion. Le dispositif comporte deux capteurs distincts, pouvant être thermiques, un des capteurs surveillant une zone haute, l'autre surveillant une zone basse, les deux zones pouvant être séparées par une zone neutre.

L'invention a donc principalement pour but de minimiser, voire supprimer, la détection de faux-positifs, en proposant un nouveau dispositif et un nouveau procédé de détection de chute, qui soient en outre simples d'installation et de mise en œuvre.

L'invention porte donc sur un dispositif de chute de personne selon la revendication 1, le dispositif comportant au moins un capteur thermique matriciel, de préférence un capteur thermopile matriciel.

Ainsi, l'invention propose une nouvelle solution très efficace dans la détection de chute de personne. Le capteur thermique matriciel peut détecter une personne immobile, ce que ne peut pas réaliser un capteur à infrarouge passif, et fournit par ailleurs une image thermique de la forme détectée. Par conséquent, le dispositif de détection de l'invention constitue une solution très efficace par rapport aux dispositifs existants, et garantit d'écarter les faux-positifs.

Le dispositif comporte des moyens électroniques de traitement qui intègrent des données de correspondance entre les pixels de la matrice du capteur thermique matriciel et, les zones de détection du capteur thermique matriciel et de préférence les distances séparant le capteur thermique matriciel de la personne ou autre élément chaud détecté.

Ainsi, le dispositif est capable d'indiquer lorsqu'une personne est détectée par le capteur thermique, si elle est debout ou assise, ou provisoirement vers le sol (par exemple courbée pour ramasser quelque chose, et constituant alors un faux-positif), ou encore au sol en ayant véritablement chuté. De plus, le dispositif permet avantageusement d'identifier la distance de la personne (ou autre point chaud détecté) par rapport au capteur thermique matriciel.

Le capteur thermique matriciel est conçu pour délimiter deux zones de détection distinctes, une zone s'étendant au-dessus du plan horizontal passant par le centre du capteur thermique matriciel, et une zone s'étendant sous ledit plan. Le dispositif comporte des moyens électroniques de traitement des données de mesure du capteur thermique matriciel, qui détectent une chute que si un ensemble des pixels détectés comme chauds apparait à la fois dans la zone haute et la zone basse, puis n'apparaît que dans la zone basse pendant une durée minimale fixée. Cette période minimale permet d'éviter les faux-positifs si une personne ne fait que se baisser pour ramasser un objet au sol par exemple.

Le dispositif comporte des moyens électroniques de traitement dotés d'un algorithme de détection de la position du point le plus chaud et de ses déplacements vis-à-vis du capteur thermique matriciel. Un tel algorithme permet de parfaire la détection de faux-positifs, et par conséquent de les écarter sans signaler de manière erronée de chute, en particulier pour une personne ou un animal suivant la personne à surveiller, et de taille bien plus basse, ou pour un objet fixe dans la pièce qui dégage de la chaleur.

En variante, le dispositif peut comporter le capteur thermique matriciel et d'autres capteurs, comme au moins un capteur de mouvement de préférence de type infra-rouge passif. Dans le cas d'utilisation d'au moins un capteur de mouvement en sus du capteur thermique matriciel, en particulier d'au moins deux capteurs de mouvement, ceux-ci sont de préférence agencés de sorte que leur secteur angulaire de détection considéré dans un plan vertical ne se coupe pas dans la zone de détection. Le dispositif de détection de chute comporte des moyens électroniques de traitement qui traitent les mesures du capteur thermique matriciel et d'au moins un capteur de détection de mouvement, et sont dotés d'au moins un algorithme de traitement utilisant les résultats de mesure du capteur thermique matriciel pour compléter ou parfaire les mesures des capteurs de détection de mouvement. Le dispositif de chute de l'invention via le capteur thermique matriciel permet alors de confirmer la chute d'une personne qui aura été détectée par les capteurs de mouvement du type à fonctionnement par infrarouge passif, ou d'infirmer la chute d'une personne (cas notamment d'un faux-positif détecté par les capteurs de mouvement à infrarouge passif).

En particulier, le capteur thermique matriciel n'est mis en œuvre que si une perte de verticalité via les capteurs de mouvement est détectée; lorsqu'une perte de verticalité est détectée, le capteur thermique matriciel, qui présente au moins deux zones de détection, une zone dite haute et une zone dite basse, est mis en œuvre et ses résultats de mesure sont utilisés de la manière suivante : si le capteur thermique matriciel détecte une présence dans la zone haute, la chute est infirmée, la personne se trouvant finalement debout ou assise, et si le capteur thermique matriciel détecte une personne uniquement en zone basse, la chute est confirmée. Dans cette configuration de détection, l'interrogation des capteurs de mouvement tourne en boucle tant qu'une perte de verticalité n'a pas été détectée.

Selon une autre caractéristique, le dispositif de détection comporte des moyens de communication pour transmettre à distance au moins une information sur la détection de chute de personne, et de préférence les données dudit au moins un capteur thermique matriciel et éventuellement les données d'autres capteurs tels qu'un ou des capteurs de mouvement.

Avantageusement, le capteur thermique matriciel se situe à une hauteur correspondant à un plan à la hauteur des jambes d'une personne debout, en particulier à la hauteur sensiblement des genoux d'une personne debout, ou au plan d'un lit, et si au moins deux capteurs de mouvement sont ajoutés, le premier capteur de détection de mouvement est positionné à proximité du sol, et le second capteur de mouvement est positionné au-dessus d'un plan correspondant sensiblement à la hauteur du bassin d'une personne se tenant debout ou à la hauteur des épaules d'une personne assise, ou au-dessus du plan supérieur d'un lit.

Avantageusement, le dispositif de détection présente un corps monobloc de forme longiligne, à la manière d'une colonne, comprenant au moins en façade, ledit au moins un capteur thermique matriciel, et éventuellement au moins un ou au moins deux capteurs de mouvement qui sont disposés à proximité des deux extrémités distales respectives du corps, ledit au moins capteur thermique matriciel étant agencé entre les deux capteurs de mouvement. De préférence, ledit corps monobloc intègre un système d'éclairage.

Le dispositif de détection peut comprendre un système d'éclairage et au moins un capteur de luminosité, le système d'éclairage étant activé en fonction de la luminosité et de la détection de mouvement, en particulier l'éclairage étant activé si la luminosité dans la zone de détection est inférieure à une valeur seuil, de préférence le dispositif de détection comprenant une régulation configurée pour augmenter progressivement l'intensité lumineuse émise par le système d'éclairage au moment de son activation.

Le dispositif peut comporter au moins une caméra et/ou d'autres éléments fonctionnels de détection, tels que des capteurs de température de la pièce où se trouve le dispositif, d'humidité, de monoxyde de carbone, de fumée.

Le dispositif peut comporter des systèmes de commandes vocales avec intégration de moyens de réception et de transmission de son.

La présente invention est maintenant décrite à l'aide d'exemples uniquement illustratifs et nullement limitatifs de la portée de l'invention, et à partir des illustrations jointes, dans lesquelles :
[Fig. 1] illustre le dispositif de chute de personne selon l'invention au regard d'un mode de réalisation avec un capteur thermique matriciel.
[Fig. 2] est une vue en perspective d'un dispositif de détection de chute selon un exemple de réalisation sous la forme d'un module monobloc intégrant en outre des capteurs de mouvement.
[Fig. 3] représente une vue schématique de côté du dispositif de la figure 2 installé contre un mur apte à détecter une personne debout, ou couchée sur le sol signifiant qu'elle est tombée.
[Fig. 4] est une vue schématique de la cartographie matricielle en pixels visualisée par le capteur thermique matriciel pour un premier exemple de position d'une personne.
[Fig. 5] montre la cartographie matricielle selon un deuxième exemple de positionnement d'une personne.
[Fig. 6] est un troisième exemple de cartographie matricielle.
[Fig. 7] est un quatrième exemple de cartographie matricielle.
[Fig. 8] est un cinquième exemple de cartographie matricielle.

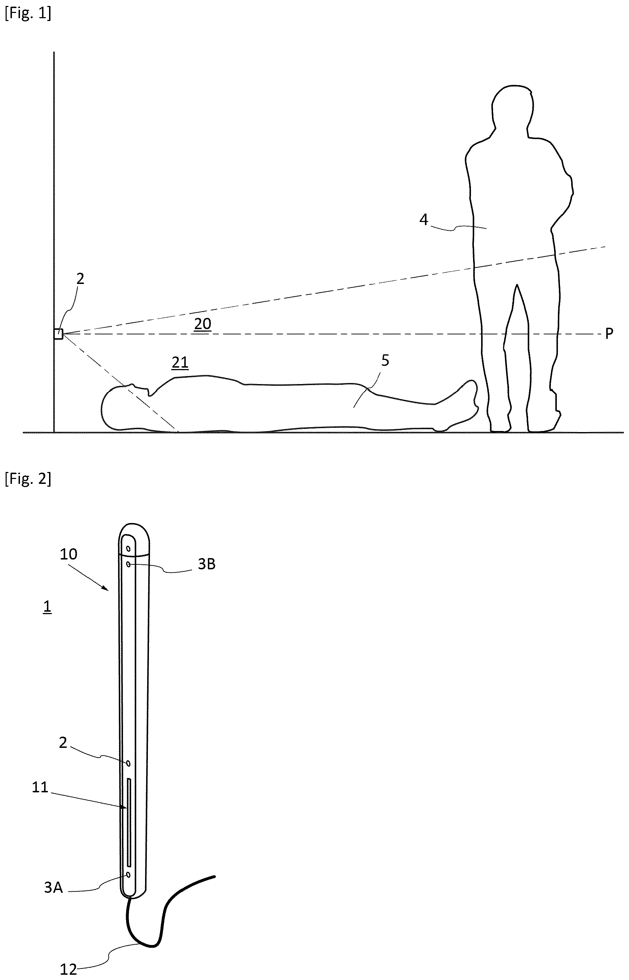

Le dispositif de détection de présence 1 de l'invention illustré sur les figures 1 à 3 a pour but de détecter une personne en mouvement dans une pièce et sa chute éventuelle, tout en écartant des résultats de détection de faux-positifs.

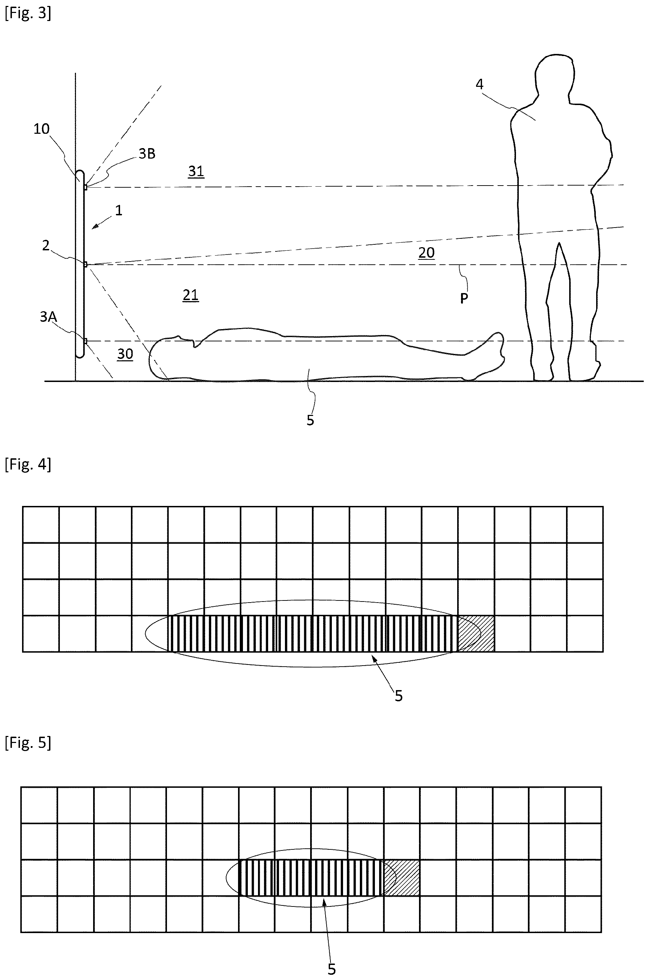

Selon l'invention, le dispositif 1 comporte au moins un capteur thermique matriciel 2 (figure 1), et éventuellement au moins un capteur de détection de mouvement 3A et/ou 3B (figures 2 et 3).

Dans le mode de réalisation illustré sur les figures 2 et 3, le dispositif de détection de présence 1se présente de préférence sous la forme d'un module monobloc 10 qui permet avantageusement de rassembler l'ensemble des moyens techniques de détection de chute, et même un éclairage 11, de sorte à procurer un système simple de mise en œuvre pour l'installateur.

Le module 10 présente de préférence la forme d'un corps longiligne, comme une colonne monobloc.

Le capteur thermique matriciel 2 est de préférence un capteur thermopile matriciel.

Les capteurs de détection de mouvement 3A et 3B sont de préférence des détecteurs à infrarouge passif. En présence de deux capteurs de mouvement 3A, et 3B, ceux-ci sont décalés en hauteur.

Les figures 1 et 3 illustrent schématiquement une personne debout 4 ou une personne au sol 5 ayant chuté, que détectera le dispositif 1/le module 10.

Le dispositif 1 comporte des moyens électroniques de traitement des données de mesure des capteurs 2, 3A et 3B, tels qu'au moins un microprocesseur et au moins un programme informatique comprenant un ou plusieurs algorithmes de traitement. De préférence, ces moyens électroniques de traitement sont également intégrés au module 10. Le dispositif 1/le module 10 comporte en outre des moyens de communication connectés aux moyens électroniques de traitement pour communiquer à distance au moins une information relative à la détection, tel qu'au moins un signal d'alarme en cas de chute détectée.

Enfin, l'ensemble des éléments nécessitant une alimentation électrique sont reliés à l'intérieur du corps du module 10 à une alimentation commune qui est connectée à un fil d'alimentation extérieur 12, lui-même adapté pour se brancher sur une prise électrique. Le module est aisé de mise en œuvre en étant prêt à son branchement et son fonctionnement, du type « Plug and Play » en anglais.

Le capteur thermique matriciel 2 est conçu pour recevoir des informations sur des zones de température de détection selon deux secteurs angulaires de détection délimités, d'une part, par un plan horizontal P passant par le centre dudit capteur thermique et s'étendant au-dessus dudit plan P pour couvrir une zone dite haute 20, et d'autre part, par ledit plan horizontal P passant par le centre du capteur thermique et s'étendant en dessous de ce plan pour couvrir une zone dite basse 21.

A titre indicatif, le capteur thermique matriciel 2 couvre pour la zone haute 20, un secteur angulaire haut (au-dessus du plan horizontal passant par le centre du capteur thermique) de l'ordre de 10°, et pour la zone basse 21, un secteur angulaire bas (en-dessous dudit plan horizontal passant par le centre du capteur thermique) de l'ordre de 20° à 30 °.

Les moyens électroniques de traitement permettent de traiter les données du capteur thermique matriciel 2 afin de déduire, la présence d'un corps chaud, si ce corps chaud est en mouvement, la dimension dudit corps chaud, et sa position dans les zones de détection. Avantageusement, un algorithme approprié peut également fournir la distance du corps chaud par rapport au capteur thermique matriciel.

Le dispositif 1 de l'invention peut détecter la présence de plusieurs personnes et détecter leur chute éventuelle.

Dans l'exemple représenté du module de détection 10, le capteur thermique matriciel 2 et les capteurs de détection de mouvement 3A et 3B sont placés verticalement selon un alignement vertical. Les capteurs de détection de mouvement 3A et 3B sont espacés selon la hauteur, en particulier à proximité respectivement de chaque extrémité distale du module. Le capteur thermique matriciel 2 est positionné entre les deux capteurs de détection de mouvement 3A et 3B, en particulier bien plus proche du capteur 3A d'extrémité basse.

Dans un autre exemple de réalisation du dispositif de chute, le capteur thermique matriciel et les capteurs de mouvement sont positionnés en des endroits distincts non nécessairement selon une ligne verticale.

Dans l'exemple du module des figures 2 et 3, le premier capteur de détection de mouvement 3A est positionné à proximité du sol, par exemple de l'ordre de 10 à 20 cm du sol. Le second capteur de détection de mouvement 3B est positionné au-dessus d'un plan correspondant sensiblement à la hauteur du bassin ou du torse d'une personne se tenant debout ou à la hauteur des épaules d'une personne assise, ou au-dessus du plan supérieur d'un lit. Le capteur thermique matriciel 2 se situe à une hauteur correspondant à un plan à la hauteur des jambes d'une personne debout, en particulier à la hauteur sensiblement des genoux d'une personne debout, ou à la hauteur du plan d'un lit.

Ainsi, lorsque le dispositif 1 constitue le module monobloc de détection 10, celui-ci est installé à distance du sol, par exemple de l'ordre de 10 à 20 cm du sol, les deux capteurs de détection de mouvement 3A et 3B étant distants l'un de l'autre de l'ordre, entre 70 et 110 cm, tandis que le capteur thermique matriciel 2 est de l'ordre de 20 cm au-dessus du capteur d'extrémité basse 3A.

Les deux capteurs de détection de mouvement bas 3A et haut 3B sont de préférence conçus pour recevoir des ondes de détection selon un secteur angulaire limité dans le plan vertical, afin que le secteur angulaire de l'un ne rencontre pas le secteur angulaire de l'autre. Ainsi, le capteur bas 3A détectera une zone dite basse 30 qui correspond à la partie basse d'une personne, tandis que le capteur haut 3B détectera une zone dite haute 31 qui correspond à la partie supérieure d'une personne. Les capteurs de mouvement 3A et 3B ont pour but de détecter une perte de verticalité d'une personne en mouvement. En cas de perte de verticalité, les secteurs angulaires ne se recouvrant pas, les moyens électroniques de traitement analyseront une perte de verticalité lorsque le capteur bas 3A détectera une présence dans sa zone basse 30, tandis que le capteur haut 3B ne détectera aucune présence dans sa zone haute 31.

A titre indicatif, chaque capteur de détection de mouvement 3A, 3B couvre un secteur angulaire, par exemple de l'ordre 45° par rapport à un plan médian horizontal passant par le centre du capteur.

Le capteur thermique matriciel 2 permet de s'assurer du résultat des capteurs de détection de mouvement, bas 3A et haut 3B, lorsqu'ils détectent une perte de verticalité qui suppose une chute, et de confirmer ou d'infirmer la chute éventuelle. Le capteur thermique matriciel 2 est conçu pour recevoir des informations sur des zones de température de détection selon ses deux zones de détection basse et haute. Les secteurs angulaires de détection du capteur thermique 2 peuvent couper les secteurs de détection des capteurs de mouvement 3A et 3B, sans perturber les résultats de détection.

De préférence, le dispositif 1, via ses moyens électroniques de traitement, comporte un algorithme de traitement des données des différents capteurs 2, et 3A, 3B, qui traite les données pour s'assurer, à partir des résultats du capteur thermique matriciel 2, de la véracité du résultat d'une détection de perte de verticalité et de chute par les capteurs de mouvement 3A et 3B. Dans cette variante de réalisation, seuls les capteurs de mouvement 3A et 3B sont opérationnels en permanence, tandis que le capteur thermique 2 est mis en œuvre lorsqu'une perte de verticalité est détectée, et permet de vérifier s'il s'agit bien d'une chute ou non.

Selon l'invention, lorsqu'une chute est confirmée par le dispositif de l'invention, les moyens électroniques de traitement envoient à distance un signal d'alarme.

Le signal d'alarme peut être associé à d'autres transmissions de données à distance, par exemple la présence d'une personne dans la pièce, sa position dans la pièce, le nombre de personnes dans la pièce, la présence d'un animal, la présence de la personne dans le lit ou dans un fauteuil ou à des déclenchements divers, par exemple le déclenchement d'une caméra dans la pièce.

Le dispositif de détection de chute est capable de transmettre à distance, à la demande, l'information de la présence ou non d'une personne dans le champ de vision du dispositif.

Le dispositif de détection de chute peut également présenter un système de commande vocale et de haut-parleurs.

Le dispositif de détection de chute peut également présenter un système de luminothérapie couplé au système d'éclairage automatique.

Le fonctionnement du dispositif 1 de détection de chute de personne de l'invention est à présent décrit. Le capteur thermique matriciel 2 fournit aux moyens électroniques de traitement, une matrice en pixels de l'image détectée en face de lui en distinguant sur les pixels les différences de températures détectées. La matrice représente une image du volume de la pièce se trouvant face au dispositif de détection 1. Les températures seront plus élevées, pour les zones chaudes, et plus faibles pour les zones froides. Puis, en fonction de l'emplacement de la température des pixels, les moyens électroniques de traitement déduisent la position dans l'espace d'un corps chaud par rapport au dispositif 1/module 10, et la dimension dudit corps chaud. L'algorithme de traitement des données comporte des éléments de référence pour assurer une correspondance entre, d'une part, les zones de la matrice de pixels, la taille des pixels (qui est fixe pour un capteur et peut être différente selon les capteurs), et la température des pixels par rapport à leur position dans la matrice, et d'autre part, la cartographie de l'espace analysé de la pièce, en distinguant les zones haute 20 et basse 21, et les dimensions réelles de l'espace. En outre, l'algorithme peut être conçu pour fournir la distance de séparation du corps chaud au capteur thermique matriciel.

Lorsque le dispositif ne comporte qu'un capteur thermique matriciel 2, la détection de chute qui correspond à une détection de perte de verticalité se fait grâce à une analyse en temps réel des pixels détectés comme « chauds » : les moyens électroniques de traitement détectent des ensembles de pixels chauds appelés « blobs » qui sont alors assimilés à une personne humaine, un animal, un élément extérieur chauffant, etc. La détection de perte de verticalité se base toujours sur les deux zones dites haute et basse : un blob se déplaçant à la fois dans les deux zones correspond à une personne se déplaçant debout ou en fauteuil roulant ; un blob se déplaçant à la fois dans les deux zones puis n'apparaissant que dans la zone basse correspond à une personne qui a chuté ; un blob ne se déplaçant que dans la zone basse dès son entrée dans le champ de vision du capteur peut correspondre à un animal. Une distinction est faite entre les différents blobs détectés, par exemple une personne et son animal de compagnie qui le suit, ce qui permet de détecter une chute malgré la présence d'un autre corps chaud dans le champ de vision du capteur.

Si deux blobs viennent à se rencontrer, les moyens électroniques de traitement peuvent toujours les différencier grâce aux températures des pixels les composant, par exemple, un animal passant entre une personne assise et le dispositif de détection de chutes n'aura pas la même température corporelle que cette personne, ce qui permettra le maintien de la multiplicité des blobs.

Une chute n'est détectée que si un blob apparait à la fois dans la zone haute et la zone basse, puis n'apparait que dans la zone basse pendant une durée minimale fixée. Cette période minimale permet d'éviter les faux-positifs si une personne ne fait que se baisser pour ramasser un objet au sol par exemple. Les moyens électroniques de traitement sont aptes à suivre un blob en temps réel, et de comprendre ses mouvements, même si celui-ci vient à être divisé en deux en cas de mauvaise détection d'un pixel, notamment pour éviter les faux positifs dus aux sorties de pièce, par exemple une sortie en fauteuil roulant en marche arrière où les derniers pixels du blob correspondraient aux pieds de la personne et seraient donc considérés comme en zone basse.

Les figures 4 à 8 illustrent des exemples comparatifs de matrices pour des situations différentes de personnes détectées par le capteur thermique matriciel 2. Selon la température détectée, les pixels présentent des températures différentes qui sont ici illustrées par des motifs différents. Les pixels à rayures verticales et schématiquement entourés, correspondent à un corps chaud détecté, de température correspondant au corps humain. Les trois rangées supérieures de pixels correspondent à la zone haute 20, tandis que la ligne de pixels inférieure correspond à la zone basse 21.

La figure 4 correspond à une personne 5 qui est couchée au sol à 1 m devant le dispositif de détection 1, le corps étant parallèle au mur sur lequel est fixé le dispositif de détection.

La figure 5 illustre une personne 5 qui est couchée au sol à 2 m devant le dispositif de détection, le corps étant parallèle au mur sur lequel est fixé le dispositif de détection.

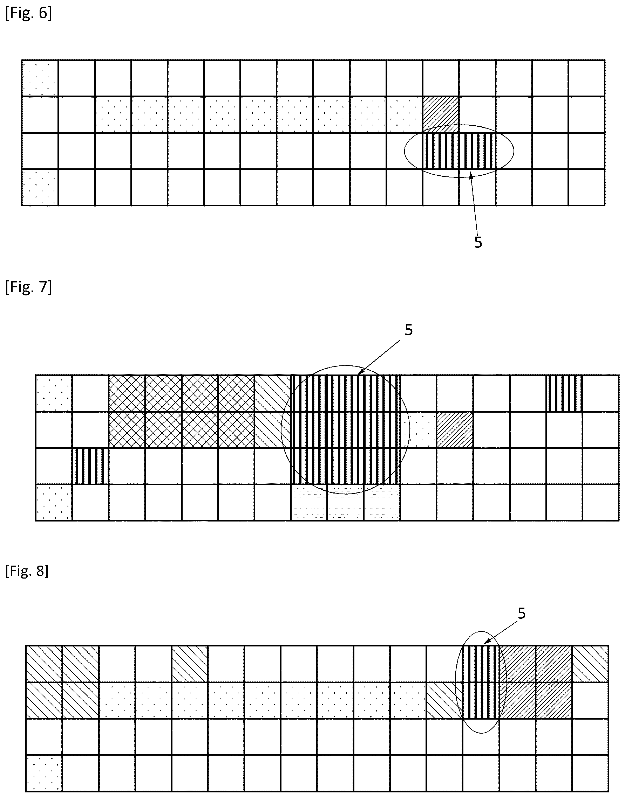

La figure 6 correspond à une personne 5 qui est couchée au sol à 4 m du dispositif de détection et dans une direction perpendiculaire au mur sur lequel est fixé le dispositif.

La figure 7 correspond à une personne assise dans un fauteuil, 2 m devant le dispositif de détection.

La figure 8 correspond à une personne debout 4 qui se trouve à 4 m du dispositif de détection.

Ainsi, les moyens électroniques de traitement analysent :
- si la personne ne se trouve que dans la zone basse, ce qui est équivalent à une perte de verticalité, et à quelle distance du dispositif de détection ;
- si la détection se fait à la fois en zone haute et basse, ce qui signifie que la personne se trouve debout ou assise ;
- si la personne ne se trouve que dans la zone haute, ce qui signifie que la personne est debout à une certaine distance du dispositif de détection, ici à 5 m environ du dispositif de détection.

En cas de présence d'un élément chauffant autre qu'une personne, par exemple une fenêtre, un radiateur, les moyens électroniques de traitement détectent des pixels « chauds » qui sont fixes et les ignore temporairement pour assurer néanmoins la détection de personne.

Enfin, pour écarter des faux-positifs, tels un élément se déplaçant et de plus petite taille qu'une personne debout (par exemple un animal ou un enfant), les moyens électroniques de traitement détectent dans la matrice de pixels du capteur thermique matriciel 2, la position du point le plus chaud et ses déplacements.

Lorsque le dispositif de détection de chute 1 de l'invention comporte un capteur thermique matriciel 2 et par exemple deux capteurs de mouvement 3A et 3B par infrarouge passif, les étapes mises en œuvre par l'algorithme sont les suivantes :
- détection d'une perte de verticalité via les capteurs de mouvement 3A et 3B, et tant qu'une perte de verticalité n'est pas détectée, l'interrogation desdits capteurs de mouvement tourne en boucle ;
- lorsqu'une perte de verticalité est détectée, détection de la position de la personne via le capteur thermique matriciel 2 ;
- détection de la personne en zone haute 20 : si le capteur thermique matriciel 2 détecte une présence dans la zone haute, la chute est infirmée, la personne se trouvant finalement debout ou assise, et dans ce cas le résultat de mesure de la zone basse peut permettre en combinaison (selon l'algorithme associé) de connaître la distance du dispositif de détection à laquelle se trouve la personne ;
- détection de la personne en zone basse 21 lorsque le capteur thermique matriciel 2 n'a pas détecté de personne dans la zone haute 20 : si le capteur thermique matriciel 2 détecte un personne en zone basse, la chute est confirmée, tandis que s'il ne détecte pas de personne en zone basse, la chute est infirmée signifiant par exemple que la pièce est vide.

## Revendications

1. Dispositif de détection de chute de personne fixé à un mur, comportant :
- au moins un capteur thermique matriciel (2), de préférence un capteur thermopile matriciel, configuré pour fournir une matrice en pixels d'une image détectée en face de lui en distinguant sur les pixels les différences de températures détectées, la matrice représentant une image du volume de la pièce se trouvant face au dispositif de détection ; le capteur thermique matriciel étant conçu pour délimiter deux zones de détection distinctes, une zone (20) s'étendant au-dessus du plan horizontal passant par le centre du capteur thermique matriciel, et une zone (21) s'étendant sous ledit plan;
- des moyens électroniques de traitement des données de mesure du capteur thermique matriciel qui intègrent des données de correspondance entre les pixels de la matrice du capteur thermique matriciel et, les zones de détection dont est doté le capteur thermique matriciel ; les moyens électroniques de traitement étant dotés d'un algorithme de détection de la position du point le plus chaud et de ses déplacements vis-à-vis du capteur thermique matriciel ; les moyens électroniques de traitement détectant une chute que si un ensemble des pixels détectés comme chauds apparait à la fois dans la zone haute (20) et la zone basse (21), puis n'apparaît que dans la zone basse pendant une durée minimale fixée.

2. Dispositif de détection de chute selon la revendication précédente, **caractérisé en ce qu'**il comporte en outre au moins un capteur de mouvement de préférence de type infra-rouge passif, notamment deux capteurs de mouvement (3A, 3B) qui sont de préférence agencés de sorte que leur secteur angulaire de détection considéré dans un plan vertical ne se coupe pas dans la zone de détection.

3. Dispositif de détection de chute selon l'une quelconque des revendications précédentes, **caractérisé en ce qu'**il comporte des moyens électroniques de traitement qui traitent les mesures du capteur thermique matriciel (2) et d'au moins un capteur de détection de mouvement (3A, 3B), et sont dotés d'au moins un algorithme de traitement utilisant les résultats de mesure du capteur thermique matriciel pour traiter les mesures des capteurs de détection de mouvement.

4. Dispositif de détection de chute selon la revendication précédente, **caractérisé en ce que** le capteur thermique matriciel (2) n'est mis en œuvre que si une perte de verticalité via les capteurs de mouvement (3A, 3B) est détectée; lorsqu'une perte de verticalité est détectée, le capteur thermique matriciel (2), qui présente au moins deux zones de détection, une zone dite haute (20) et une zone dite basse (21), est mis en œuvre et ses résultats de mesure sont utilisés de la manière suivante : si le capteur thermique matriciel détecte une présence dans la zone haute, la chute est infirmée, la personne se trouvant finalement debout ou assise, et si le capteur thermique matriciel détecte une personne uniquement en zone basse, la chute est confirmée.

5. Dispositif de détection de chute selon l'une quelconque des revendications précédentes, **caractérisé en ce qu'**il comporte des moyens de communication pour transmettre à distance au moins une information sur la détection de chute de personne, et de préférence les données dudit au moins un capteur thermique matriciel et éventuellement les données d'autres capteurs tels qu'un ou des capteurs de mouvement.

6. Dispositif de détection de chute selon l'une quelconque des revendications précédentes, **caractérisé en ce que** le capteur thermique matriciel (2) se situe à une hauteur correspondant à un plan à la hauteur des jambes d'une personne debout, en particulier à la hauteur sensiblement des genoux d'une personne debout, ou au plan d'un lit, et **en ce que**, si au moins deux capteurs de mouvement sont ajoutés, le premier capteur de détection de mouvement (3A) est positionné à proximité du sol, et le second capteur de mouvement (3B) est positionné au-dessus d'un plan correspondant sensiblement à la hauteur du bassin d'une personne se tenant debout ou à la hauteur des épaules d'une personne assise, ou au-dessus du plan supérieur d'un lit.

7. Dispositif de détection de chute selon l'une quelconque des revendications précédentes, **caractérisé en ce qu'**il présente un corps monobloc de forme longiligne, à la manière d'une colonne, comprenant au moins en façade, ledit au moins un capteur thermique matriciel (2), et éventuellement au moins un ou au moins deux capteurs de mouvement (3A, 3B) qui sont disposés à proximité des deux extrémités distales respectives du corps, ledit au moins un capteur thermique matriciel étant agencé entre les deux capteurs de mouvement, et **en ce que** le corps monobloc intègre de préférence un système d'éclairage (11).

8. Dispositif de détection de chute selon l'une quelconque des revendications précédentes, **caractérisé en ce qu'**il comporte au moins une caméra et/ou d'autres éléments fonctionnels de détection, tels que des capteurs de température de la pièce où se trouve le dispositif, d'humidité, de monoxyde de carbone, de fumée.

9. Dispositif de détection de chute selon l'une quelconque des revendications précédentes, **caractérisé en ce qu'**il comporte des systèmes de commandes vocales avec intégration de moyens de réception et de transmission de son.

## Patentansprüche

1. Sturzerfassungsvorrichtung für Personen, die an einer Wand befestigt ist, vorweisend:
- mindestens einen Matrix-Wärmesensor (2), vorzugsweise einen Matrix-Thermosäulensensor, der zum Bereitstellen einer Pixelmatrix eines Bildes, das ihm gegenüber erkannt wird, konfiguriert ist, wobei auf den Pixeln die erfassten Temperaturdifferenzen unterschieden werden, wobei die Matrix ein Bild des Volumens des Raums darstellt, der sich gegenüber der Erfassungsvorrichtung befindet; wobei der Matrix-Wärmesensor zum Begrenzen zweier verschiedener Erfassungsbereiche konzipiert ist, wobei sich ein Bereich (20) oberhalb der horizontalen Ebene erstreckt, die durch die Mitte des Matrix-Wärmesensors verläuft, und sich ein Bereich (21) unterhalb der Ebene erstreckt;
- elektronische Verarbeitungsmittel für Messdaten des Matrix-Wärmesensors, die Korrespondenzdaten zwischen den Pixeln der Matrix des Matrix-Wärmesensors und den Erfassungsbereichen, mit denen der Matrix-Wärmesensor versehen ist, integrieren; wobei die elektronischen Verarbeitungsmittel mit einem Algorithmus zur Erfassung der Position des wärmsten Punktes und seiner Verschiebungen gegenüber dem Matrix-Wärmesensor versehen sind; wobei die elektronischen Verarbeitungsmittel einen Sturz nur dann erfassen, falls eine Menge an als warm erfassten Pixeln zugleich in dem oberen Bereich (20) und in dem unteren Bereich (21) erscheint, dann nur in dem unteren Bereich während einer festgelegten Mindestdauer erscheint.

2. Sturzerfassungsvorrichtung nach dem vorstehenden Anspruch,
**dadurch gekennzeichnet, dass** sie ferner mindestens einen Bewegungssensor, vorzugsweise vom passiven Infrarot-Typ, insbesondere zwei Bewegungssensoren (3A, 3B), die vorzugsweise angeordnet sind, sodass sich ihre Erkennungswinkelsektoren, in vertikaler Ebene betrachtet, in dem Erfassungsbereich nicht schneiden, vorweist.

3. Sturzerfassungsvorrichtung nach einem der vorstehenden Ansprüche,
**dadurch gekennzeichnet, dass** sie elektronische Verarbeitungsmittel vorweist, die die Messungen des Matrix-Wärmesensors (2) und von mindestens einem Bewegungserfassungssensor (3A, 3B) verarbeiten, und mit mindestens einem Algorithmus für die Verarbeitung versehen sind, der die Messergebnisse des Matrix-Wärmesensors zum Verarbeiten der Messungen der Bewegungserfassungssensoren verwendet.

4. Sturzerfassungsvorrichtung nach dem vorstehenden Anspruch,
**dadurch gekennzeichnet, dass** der Matrix-Wärmesensor (2) nur dann eingesetzt wird, wenn ein Verlust der Vertikalität über die Bewegungssensoren (3A, 3B) erfasst wird; wobei wenn ein Verlust der Vertikalität erfasst wird, der Matrix-Wärmesensor (2), der mindestens zwei Erfassungsbereiche aufweist, einen sogenannten oberen Bereich (20) und einen sogenannten unteren Bereich (21), eingesetzt wird, und seine Messergebnisse folgendermaßen verwendet werden: falls der Matrix-Wärmesensor eine Anwesenheit in dem oberen Bereich erfasst, der Sturz widerlegt wird, sich die Person schließlich stehend oder sitzend befindet, und falls der Matrix-Wärmesensor eine Person ausschließlich in dem unteren Bereich erkennt, der Sturz bestätigt wird.

5. Sturzerfassungsvorrichtung nach einem der vorstehenden Ansprüche,
**dadurch gekennzeichnet, dass** sie Kommunikationsmittel zum Fernübertragen mindestens einer Information über die Erfassung des Sturzes einer Person, und vorzugsweise die Daten des mindestens einen Matrix-Wärmesensors und gegebenenfalls die Daten anderer Sensoren wie eines oder mehrerer Bewegungssensoren vorweist.

6. Sturzerfassungsvorrichtung nach einem der vorstehenden Ansprüche,
**dadurch gekennzeichnet, dass** der matrixförmige Wärmesensor (2) in einer Höhe gelegen ist, die einer Ebene in der Höhe der Beine einer stehenden Person entspricht, insbesondere in der Höhe im Wesentlichen der Knie einer stehenden Person, oder in der Ebene eines Bettes, **und dadurch, dass,** falls mindestens zwei Bewegungssensoren hinzugefügt werden, der erste Bewegungserkennungssensor (3A) in der Nähe des Bodens positioniert ist, und der zweite Bewegungssensor (3B) oberhalb einer Ebene, die im Wesentlichen der Höhe des Beckens einer stehenden Person oder der Höhe der Schultern einer sitzenden Person entspricht, oder oberhalb der oberen Ebene eines Bettes positioniert ist.

7. Sturzerfassungsvorrichtung nach einem der vorstehenden Ansprüche,
**dadurch gekennzeichnet, dass** sie einen einstückigen Körper von länglicher Form nach Art einer Säule aufweist, umfassend, mindestens an der Vorderseite, den mindestens einen Matrix-Wärmesensor (2) und gegebenenfalls mindestens einen oder mindestens zwei Bewegungssensoren (3A, 3B), die in der Nähe der zwei jeweiligen distalen Enden des Körpers eingerichtet sind, wobei der mindestens eine Matrix-Wärmesensor zwischen den zwei Bewegungssensoren angeordnet ist, **und dadurch, dass** der einstückige Körper vorzugsweise ein Beleuchtungssystem (11) integriert.

8. Sturzerfassungsvorrichtung nach einem der vorstehenden Ansprüche,
**dadurch gekennzeichnet, dass** sie mindestens eine Kamera und/oder andere funktionale Erkennungselemente vorweist, wie Sensoren für die Temperatur des Raums, in dem sich die Vorrichtung befindet, für Feuchtigkeit, Kohlenmonoxid, Rauch.

9. Sturzerfassungsvorrichtung nach einem der vorstehenden Ansprüche,
**dadurch gekennzeichnet, dass** sie Sprachsteuerungssysteme mit Integration von Mitteln zum Empfang und zur Übertragung von Ton vorweist.

## Claims

1. Wall-mounted device for detecting a person falling, comprising:
- at least one matrix thermal sensor (2), preferably a matrix thermopile sensor, configured to provide a matrix in pixels of an image detected in front of it by distinguishing on the pixels the differences in temperatures detected, the matrix representing an image of the volume of the room facing the detection device; the matrix thermal sensor being designed to delimit two distinct detection zones, one zone (20) extending above the horizontal plane passing through the center of the matrix thermal sensor, and one zone (21) extending below said plane;
- electronic means for processing measurement data from the matrix thermal sensor, incorporating correspondence data between the pixels of the matrix thermal sensor matrix and the detection zones of the matrix thermal sensor; the electronic processing means being provided with an algorithm for detecting the position of the hottest point and its displacements relative to the matrix thermal sensor; the electronic processing means detecting a fall only if a set of pixels detected as hot appears in both the high zone (20) and the low zone (21), and then appears only in the low zone for a fixed minimum duration.

2. Fall detection device according to the preceding claim,
**characterized in that** it further comprises at least one motion sensor preferably of the passive infrared type, in particular two motion sensors (3A, 3B) which are preferably arranged so that their angular detection sector considered in a vertical plane does not intersect in the detection zone.

3. Fall detection device according to either of the preceding claims,
**characterized in that** it comprises electronic processing means which process the measurements of the matrix thermal sensor (2) and of at least one motion detection sensor (3A, 3B), and are provided with at least one processing algorithm using the measurement results of the matrix thermal sensor to process the measurements of the motion detection sensors.

4. Fall detection device according to the preceding claim,
**characterized in that** the matrix thermal sensor (2) is only operated if a loss of verticality via the motion sensors (3A, 3B) is detected; when a loss of verticality is detected, the matrix thermal sensor (2), which has at least two detection zones, a so-called high zone (20) and a so-called low zone (21), is operated and its measurement results are used as follows: if the matrix thermal sensor detects a presence in the high zone, the fall is invalidated, as the person is ultimately standing or sitting, and if the matrix thermal sensor detects a person only in the low zone, the fall is confirmed.

5. Fall detection device according to any of the preceding claims,
**characterized in that** it comprises communication means for remotely transmitting at least one piece of information on the detection of a person falling, and preferably the data from said at least one matrix thermal sensor and optionally the data from other sensors such as one or more motion sensors.

6. Fall detection device according to any of the preceding claims,
**characterized in that** the matrix thermal sensor (2) is located at a height corresponding to a plane at the height of the legs of a standing person, in particular substantially at the height of the knees of a standing person, or to the plane of a bed, **and in that,** if at least two motion sensors are added, the first motion detection sensor (3A) is positioned close to the ground, and the second motion sensor (3B) is positioned above a plane corresponding substantially to the pelvic height of a standing person or to the shoulder height of a seated person, or above the upper plane of a bed.

7. Fall detection device according to any of the preceding claims,
**characterized in that** it has an elongate, column-like, one-piece body comprising, at least at the front, said at least one matrix thermal sensor (2), and optionally at least one or at least two motion sensors (3A, 3B) which are arranged near the two respective distal ends of the body, said at least one matrix thermal sensor being arranged between the two motion sensors, **and in that** the one-piece body preferably incorporates a lighting system (11).

8. Fall detection device according to any of the preceding claims,
**characterized in that** it comprises at least one camera and/or other functional detection elements, such as sensors for the temperature of the room in which the device is located, for humidity, carbon monoxide and smoke.

9. Fall detection device according to any of the preceding claims,
**characterized in that** it comprises voice command systems with integrated sound reception and transmission means.
